# EUROPEAN PATENT SPECIFICATION

(11) **EP 3 225 659 B1**
(45) Date of publication and mention of the grant of the patent: **14.10.2020**
(21) Application number: 15862742.2
(22) Date of filing: 25.11.2015
(51) Int. Cl.: C08L 27/12, C08K 3/00, C08K 5/103, C08K 5/14

(54) **FLUORORUBBER COMPOSITIONS AND CROSSLINKED FLUORORUBBER ARTICLE**
FLUORKAUTSCHUKZUSAMMENSETZUNGEN UND ARTIKEL AUS VERNETZTEM FLUORKAUTSCHUK
COMPOSITIONS DE CAOUTCHOUC FLUORÉ ET ARTICLE EN CAOUTCHOUC FLUORÉ RÉTICULÉ

(30) Priority: 28.11.2014 JP 2014241262; 29.09.2015 JP 2015192135
(43) Date of publication of application: 04.10.2017
(73) Proprietor: AGC Inc., Tokyo 100-8405 (JP)
(72) Inventor: YAMADA, Takeshi, Tokyo 100-8405 (JP); YASUDA, Satoko, Tokyo 100-8405 (JP); IRUYA, Ken, Tokyo 100-8405 (JP)
(74) Representative: Müller-Boré & Partner Patentanwälte PartG mbB
(86) International application number: PCT/JP2015/083113
(87) International publication number: WO 2016/084862

(56) References cited:
- WO-A1-99/32046
- CN-A- 1 467 241
- JP-A- S63 189 450
- JP-A- S63 245 450
- JP-A- 2009 084 484
- JP-A- 2014 521 755
- JP-A- 2015 121 249
- US-A1- 2010 196 709
- US-A1- 2013 053 494
- DATABASE CA [Online] CHEMICAL ABSTRACTS SERVICE, COLUMBUS, OHIO, US; ZHANG, KAIHUI ET AL: "A connection seal ring and preparation method thereof", XP002779969, retrieved from STN Database accession no. 159:732143 -& CN 103 387 727 A (WUHU YINHONG HYDRAULIC PRESSURE PARTS CO., LTD., PEOP. REP. CHINA) 13 November 2013 (2013-11-13)

## Description

The present invention relates to a fluororubber composition and a crosslinked fluororubber article.

In order to obtain a fluororubber article by forming a fluororubber, e.g. press molding, injection molding, extrusion or transfer molding is usually employed. Among these molding methods, e.g. injection molding, extrusion and transfer molding, in which a fluororubber composition is required to have high fluidity, may degrade surface smoothness of the obtainable fluororubber article.

Therefore, in order to impart high fluidity to a fluororubber composition and improve surface smoothness of a fluororubber article, a processing assistant has been used.

For example, Examples 9 and 10 of Patent Document 1 disclose a fluororubber composition containing Tecnoflon (registered trademark) P757 manufactured by SOLVAY as a fluororubber and Emaster (registered trademark) 430W manufactured by Riken Vitamin Co., Ltd. as a processing assistant and a plasticizer. This Emaster (registered trademark) 430W, which is a pentaerythritol fatty acid ester (see Ex. 1 of Patent Document 2), is a processing assistant to be used for e.g. improving surface smoothness of a rubber article (see Non-Patent Document 1).

As a processing assistant, wax may be used other than a fatty acid ester. For example, Patent Document 3 describes that synthetic wax such as polyethylene wax having an average molecular weight of at least 1,000 is blended to a fluororubber composition. Patent Document 3 discloses that it is possible to reduce the mold release property of a fluororubber article from a die during producing the fluororubber article and adhesion of the fluororubber article to an object material, by blending a specific amount of the synthetic wax.
Patent Document 1: JP-A-2006-188689
Patent Document 2: JP-A-11-323058
Patent Document 3: Japanese Patent No. 5315657

Non-Patent Document 1: Riken Vitamin Co., Ltd., "Improving agents for chemical industry" (introduction manual), "processing enhancement agents" on page 3

However, the processing assistant disclosed in Patent Document 1 is insufficient to improve surface smoothness or moldability such as fluidity. Further, if a large amount of the processing assistant is blended for sufficiently obtaining such effects, rubber properties such as strength are deteriorated. Further, if an excess amount of the processing assistant is blended, the processing assistant tends to bleed out onto the surface of the rubber article.

Further, even when polyethylene wax described in Patent Document 3 is blended, improvement of surface smoothness or moldability such as fluidity of a fluororubber article is not expected.

Further relevant prior art is CN 103 387 727 A, US 2010/196709 A1 and US 2013/053494 A1.

It is an object of the present invention to provide a fluororubber composition excellent in formability, with which it is possible to produce a crosslinked fluororubber article excellent in surface smoothness while maintaining rubber properties such as strength.

The present invention provides the following [1] to [12].
[1] A fluororubber composition comprising a fluororubber (A) and a glycerol ester (B) of a C₁₄₋₂₀ unsaturated fatty acid, wherein the content of the glycerol ester (B) is from 0.9 to 2.6 parts by mass, based on 100 parts by mass of the fluororubber (A), wherein the glycerol ester (B) is either one or both of a glycerol monoester and a glycerol diester.
[2] The fluororubber composition according to the above [1], wherein the C₁₄₋₂₀ unsaturated fatty acid is at least one member selected from the group consisting of palmitoleic acid, oleic acid and vaccenic acid.
[3] The fluororubber composition according to the above [1] or [2], wherein the glycerol ester (B) is either one or both of oleic acid monoglyceride and oleic acid diglyceride.
[4] The fluororubber composition according to any one of the above [1] to [3], which further contains a filler (C), wherein the content of the filler (C) is from 1 to 100 parts by mass, based on 100 parts by mass of the fluororubber (A).
[5] The fluororubber composition according to the above [4], wherein the filler is at least one member selected from the group consisting of furnace black and thermal black.
[6] The fluororubber composition according to any one of the above [1] to [5], which further contains an organic peroxide (D), wherein the content of the organic peroxide (D) is from 0.1 to 5 parts by mass, based on 100 parts by mass of the fluororubber (A).
[7] The fluororubber composition according to the above [6], wherein the organic peroxide is α,α'-bis(t-butylperoxy)-p-diisopropylbenzene or 2,5-dimethyl-2,5-di(t-butylperoxy)hexane.
[8] The fluororubber composition according to any one of the above [1] to [7], wherein the fluororubber (A) is at least one member selected from the group consisting of a tetrafluoroethylene/propylene copolymer, a tetrafluoroethylene/propylene/vinylidene fluoride copolymer, a vinylidene fluoride/hexafluoropropylene copolymer, a vinylidene fluoride/tetrafluoroethylene/hexafluoropropylene copolymer, a vinylidene fluoride/2,3,3,3-tetrafluoropropene copolymer and a tetrafluoroethylene/perfluoro(alkyl vinyl ether) copolymer.
[9] The fluororubber composition according to any one of the above [1] to [8], wherein the fluororubber (A) contains units based on tetrafluoroethylene and units based on propylene, wherein the molar ratio of the units based on tetrafluoroethylene to the units based on propylene, is from 40/60 to 70/30.
[10] The fluororubber composition according to any one of the above [1] to [9], wherein the fluororubber (A) contains iodine atoms, wherein the content of iodine is from 0.01 to 5.0 mass%.
[11] A crosslinked fluororubber article obtained by crosslinking the fluororubber composition as defined in any one of the above [1] to [10].
[12] The crosslinked fluororubber article according to the above [11], which has a tensile strength of at least 9 MPa, a tensile elongation of at least 100% and an elongation remaining proportion after a heat aging resistance test (230°C×168 hours) of at least 60%, wherein the tensile strength and the tensile elongation are determined according to JIS K6251:2004, and the elongation remaining proportion after a heat aging resistance test is determined according to JIS K6257:2003 and JIS K6251:2004.

According to the present invention, it is possible to provide a fluororubber composition excellent in formability, with which it is possible to produce a crosslinked fluororubber article excellent in surface smoothness while maintaining rubber properties such as strength.

In this specification, the term "units" means units based on a monomer, which are formed by polymerization of the monomer. The units may be units formed directly by a polymerization reaction, or may be units having some of such units converted to another structure by treating the polymer. Hereinafter, as the case requires, units based on an individual monomer may be called by a name having "units" attached to the monomer name.

"Monomer" means a compound having a polymerizable unsaturated bond i.e. a polymerization reactive carbon-carbon double bond.

"Main chain" indicates a chain having a largest number of carbon atoms among carbon chains formed by polymerizing a monomer.

"Side chain" means a moiety bonded to a main chain formed by polymerizing a monomer.

"Fluororubber" means an elastic copolymer (fluorinated elastomer) having fluorine atoms in its molecule.

### [Fluororubber composition]

The fluororubber composition of the present invention contains a fluororubber (A) and a glycerol ester (B) of a C₁₄₋₂₀ unsaturated fatty acid (hereinafter, simply referred to also as "glycerol ester (B)"). Further, the content of the glycerol ester (B) is from 0.9 to 2.6 parts by mass, based on 100 parts by mass of the fluororubber (A).

### <Fluororubber (A)>

The fluororubber (A) is a rubber having fluorine atoms in its molecule. The fluorine atoms may be bonded to carbon atoms constituting a main chain or carbon atoms constituting a side chain.

The fluorine content in the fluororubber (A) is preferably from 40 to 75 mass%, more preferably from 45 to 75 mass%, most preferably from 50 to 75 mass%. When the fluorine content is within the above range, a crosslinked fluororubber article excellent in heat resistance, heat resistance, oil resistance, chemical resistance, electrical insulating properties and steam resistance, is readily obtainable.

In this specification, the fluorine content in the fluororubber (A) is a proportion of the total mass of all fluorine atoms to the total mass of the fluororubber (A).

As a specific example of the fluororubber (A), a tetrafluoroethylene (hereinafter, also referred to as "TFE")/propylene copolymer, a TFE/propylene/vinylidene fluoride (hereinafter, also referred to as "VdF") copolymer, a TFE/propylene/vinyl fluoride copolymer, a TFE/propylene/trifluoroethylene copolymer, a TFE/propylene/pentafluoropropylene copolymer, a TFE/propylene/chlorotrifluoroethylene copolymer, a TFE/propylene/ethylidene norbornene copolymer, a VdF/hexafluoropropylene (hereinafter, also referred to as "HFP") copolymer, a VdF/TFE/HFP copolymer, a VdF/HFP/perfluoro(alkyl vinyl ether) copolymer, a VdF/chlorotrifluoroethylene copolymer, a VdF/tetrafluoropropene copolymer, a HFP/ethylene copolymer, a TFE/perfluoro(alkyl vinyl ether) copolymer, a VdF/TFE/perfluoro(alkyl vinyl ether) copolymer, a VdF/2,3,3,3-tetrafluoropropene copolymer, a TFE/VdF/2,3,3,3-tetrafluoropropene copolymer, a TFE/perfluoro(alkyl vinyl ether) copolymer, a HFP/perfluoro(alkyl vinyl ether) copolymer, a TFE/HFP/perfluoro(alkyl vinyl ether) copolymer, a TFE/perfluoroolefin copolymer, a HFP/perfluoroolefin copolymer or a TFE/HFP/perfluoroolefin copolymer may, for example, be mentioned.

In the present invention, the fluororubber (A) preferably contains iodine atoms. The content of iodine atoms in the fluororubber (A) is preferably from 0.01 to 5.0 mass%, more preferably from 0.05 to 2.0 mass%, most preferably from 0.1 to 1.0 mass%. When the content is within such a range, a fluororubber is excellent in surface smoothness and further excellent in forming speed because of excellent crosslinking speed. The iodine content in the fluororubber (A) is a proportion of the total mass of all iodine atoms to the total mass of the fluororubber (A).

In the fluororubber (A) containing iodine atoms, the iodine atoms are usually bonded to a terminal or a side chain of a polymer chain of the fluororubber (A). The iodine atoms are introduced into the fluororubber (A) by e.g. a method of copolymerizing a monomer containing an iodine atom or a method of using a chain transfer agent containing an iodine atom during polymerization.

The fluororubber (A) is preferably at least one member selected from the group consisting of a TFE/propylene copolymer (1), a TFE/propylene/VdF copolymer (2), a VdF/HFP copolymer (3), a VdF/TFE/HFP copolymer (4), a VdF/2,3,3,3-tetrafluoropropene copolymer (5) and a TFE/perfluoro(alkyl vinyl ether) copolymer (6), and such a copolymer is excellent in heat resistance and oil resistance.

In particular, in view of H₂ S gas resistance, the TFE/propylene copolymer (1) is more preferred.

Now, the copolymers (1) to (6) will be explained.

### (TFE/propylene copolymer (1))

A TFE/propylene copolymer is a copolymer containing TFE units and propylene units (other than the TFE/propylene/VdF copolymer (2)).

The molar ratio of TFE units/propylene units is preferably from 40/60 to 70/30, more preferably from 45/55 to 65/35, most preferably from 50/50 to 60/40.

When the molar ratio of the TFE units/propylene units is within the above range, the rubber elasticity is excellent.

The total of TFE units and propylene units, based on all units in the TFE/propylene copolymer, is preferably from 60 to 100 mol%, more preferably from 70 to 100 mol%, furthermore preferably from 80 to 100 mol%.

The Mooney viscosity (100°C) of the TFE/propylene copolymer (hereinafter, simply referred to also as "Mooney viscosity") is preferably from 30 to 170, more preferably from 35 to 160.

In a case where the Mooney viscosity of the TFE/propylene copolymer is not measurable, an elastic shear modulus G' (hereinafter, simply referred to also as "G"') of the TFE/propylene copolymer is preferably from 70 to 600, more preferably from 70 to 550, most preferably from 100 to 500.

When the Mooney viscosity or G' is within the above range, the processability will be excellent.

In this specification, the Mooney viscosity is a value obtainable by measurement by setting the preheating time to be 1 minute at 100°C and the rotor rotating time to be 4 minutes, in accordance with JIS K6300: 2001 using a large rotor having a diameter of 38.1 mm and a thickness of 5.54 mm. The larger the value of the Mooney viscosity, the higher the molecular weight.

In this specification, the value of G' is a value obtainable by measurement at a temperature of 100°C with an amplitude of 0.5 degree at a vibration frequency of 50 times/min, in accordance with ASTM D5289 and D6204 using a viscoelasticity measuring apparatus "RPA2000" manufactured by Alpha Technology Co., Ltd. The larger the value of G', the higher the molecular weight.

The glass transition temperature of the TFE/propylene copolymer is preferably from -10 to 10°C, more preferably from -10 to 5°C.

A TFE/propylene copolymer satisfying such properties is available as commercial products, and it is preferably selected for use from those commercially available particularly for cross-linking (vulcanization) using a peroxide.

For example, those with the following grades of AFLAS (registered trademark) series manufactured by Asahi Glass Company, limited. may be mentioned. AFLAS (registered trademark) 100H (G': 500), 100S (Mooney viscosity: 115), 150P (Mooney viscosity: 70), 150E (Mooney viscosity: 45), and 150L (G': 80) may be mentioned. Each of them has a fluorine content of 57 mass% and a glass transition temperature of - 3°C.

Further, as the TFE/propylene copolymer, e.g. a copolymer having a small amount of a monomer having a plurality of double bonds copolymerized, as described in JP-A-2006-70245, is suitably available.

The TFE/propylene copolymer having iodine atoms can be produced by the process described in WO2009/119202, WO2010/53056 or the like.

### (TFE/propylene/VdF copolymer (2))

A TFE/propylene/VdF copolymer is a copolymer containing TFE units, propylene units and VdF units.

The molar ratio of TFE units/propylene units/VdF units is preferably from 35/15/50 to 55/44/1, more preferably from 35/17/48 to 55/44/1, most preferably from 35/20/45 to 55/44/1.

The total of TFE units, propylene units and VdF units is preferably from 70 to 100 mol%, more preferably from 80 to 100 mol%, furthermore preferably from 90 to 100 mol%, based on all units in the TFE/propylene/VdF copolymer.

The Mooney viscosity is preferably from 30 to 170, more preferably from 35 to 160.

G' is preferably from 70 to 600, more preferably from 70 to 550, most preferably from 100 to 500.

The glass transition temperature of the TFE/propylene/VdF copolymer is preferably from -10 to 10°C, more preferably from -10 to 5°C.

As an example of commercial products of the TFE/propylene/VdF copolymer, AFLAS (registered trademark) 200P manufactured by Asahi Glass Company, Limited, may be mentioned.

### (VdF/HFP copolymer (3))

A VdF/HFP copolymer is a copolymer containing VdF units and HFP units (other than the VdF/TFE/HFP copolymer (4)).

The molar ratio of VdF units/HFP units is preferably from 60/40 to 95/5, more preferably from 70/30 to 90/10, most preferably from 75/25 to 85/15.

The total of VdF units and HFP units is preferably from 60 to 100 mol%, more preferably from 70 to 100 mol%, furthermore preferably from 80 to 100 mol%, based on all units in the VdF/HFP copolymer.

The VdF/HFP copolymer containing iodine atoms can be produced by the process as described in WO2012/026555 or the like.

Commercial products of the VdF/HFP copolymer may, for example, be Viton (registered trademark) A401C manufactured by DuPont Dow Elastomers, DAIEL (registered trademark) G701 manufactured by Daikin Industries Ltd., Dyneon (registered trademark) FE-5620Q manufactured by Sumitomo 3M Limited, etc.

### (VdF/TFE/HFP copolymer (4))

A VdF/TFE/HFP copolymer is a copolymer containing VdF units, TFE units and HFP units.

The molar ratio of VdF units/TFE units/HFP units is preferably from 50/5/45 to 65/30/5, more preferably from 50/15/35 to 65/25/10, most preferably from 50/20/30 to 65/20/15.

The total of VdF units, TFE units and HFP units is preferably from 70 to 100 mol%, more preferably from 80 to 100 mol%, furthermore preferably from 90 to 100 mol%, based on all units in the VdF/TFE/HFP copolymer.

The VdF/TFE/HFP copolymer containing iodine atoms can be produced by the process as described in WO2012/026549 or the like.

Commercial products of the VdF/TFE/HFP copolymer may, for example, be Viton (registered trademark) B601C manufactured by DuPont Dow Elastomers, DAIEL (registered trademark) G621 manufactured by Daikin Industries Ltd., Dyneon (registered trademark) FE-5840Q manufactured by Sumitomo 3M Limited, etc.

### (VdF/2,3,3,3-tetrafluoropropene copolymer (5))

A VdF/2,3,3,3-tetrafluoropropene copolymer is a copolymer containing VdF units and 2,3,3,3-tetrafluoropropene units.

The molar ratio of VdF units/2,3,3,3-tetrafluoropropene units is preferably from 30/70 to 95/5, more preferably from 50/50 to 90/10, most preferably from 60/40 to 85/15.

The total of VdF units and 2,3,3,3-tetrafluoropropene units is preferably from 60 to 100 mol%, more preferably from 80 to 100 mol%, based on all units in the VdF/2,3,3,3-tetrafluoropropene copolymer.

### (TFE/perfluoro(alkyl vinyl ether) copolymer (6))

A TFE/perfluoro(alkyl vinyl ether) copolymer is a copolymer containing TFE units and perfluoro(alkyl vinyl ether) units.

As a specific example of a perfluoro(alkyl vinyl ether), perfluoro(methyl vinyl ether), perfluoro(ethyl vinyl ether), perfluoro(propyl vinyl ether), perfluoro(methoxyethyl vinyl ether), perfluoro(ethoxyethyl vinyl ether) or perfluoro(propoxypropyl vinyl ether) may, for example, be mentioned. Among them, perfluoro(methyl vinyl ether), perfluoro(ethyl vinyl ether) or perfluoro(propyl vinyl ether) is preferred.

The molar ratio of TFE units/perfluoro(alkyl vinyl ether) units is preferably from 40/60 to 99/1, more preferably from 50/50 to 90/10, most preferably from 60/40 to 80/20.

The total of TFE units and perfluoro(alkyl vinyl ether) units is preferably from 60 to 100 mol%, more preferably from 70 to 100 mol%, furthermore preferably from 80 to 100 mol%, based on all units in the TFE/perfluoro(alkyl vinyl ether) copolymer.

The TFE/perfluoro(alkyl vinyl ether) copolymer containing iodine atoms can be produced by the process as described in WO2010/082633 or the like.

Commercial products of the TFE/perfluoro(alkyl vinyl ether) copolymer may, for example, be AFLAS (registered trademark) Premium PM-1100 or Premium PM-3000, manufactured by Asahi Glass Company, Limited.

### <Glycerol ester (B)>

The glycerol ester (B) is a glycerol ester of a C₁₄₋₂₀ unsaturated fatty acid. The number of carbon atoms in the unsaturated fatty acid forming the glycerol ester (B) is preferably from 16 to 18, more preferably 18.

A C₁₆₋₁₈ unsaturated fatty acid may, for example be palmitoleic acid, oleic acid, vaccenic acid, linoleic acid, linolenic acid or eleostearic acid. Among them, it is preferably at least one member selected from the group consisting of palmitoleic acid, oleic acid and vaccenic acid, more preferably oleic acid.

The number of unsaturated bonds contained in the unsaturated fatty acid is preferably 1 or 2, more preferably 1.

According to the present invention, the glycerol ester (B) is either one or both of a glycerol monoester having one of three hydroxy groups in glycerol ester-bonded to the fatty acid, and a glycerol diester having two of three hydroxy groups in glycerol ester-bonded to the fatty acid. In particular, it is most preferably either one or both of oleic acid monoglyceride (hereinafter referred to also as "glycerol monooleate") and oleic acid diglyceride (hereinafter referred to also as "glycerol dioleate"). Monoglyceride containing diglyceride is industrially easily available.

The melting point of the glycerol ester (B) is preferably from -50 to 120°C, more preferably from 0 to 100°C. For example, the melting point of oleic acid monoglyceride (purity: 95%) is from 48 to 53°C.

In the fluororubber composition, the content of the glycerol ester (B) is from 0.9 to 2.6 parts by mass, based on 100 parts by mass of the fluororubber (A).

When the content of the glycerol ester (B) is at least the above lower limit value, a crosslinked fluororubber article obtainable will be remarkably excellent in surface smoothness. Further, even when forming is carried out at a high speed, no surface roughness occurs to the crosslinked fluororubber article, and therefore it is possible to increase an extrusion amount. For example, in a case where extrusion is carried out by using a fluororubber composition, the surface smoothness of a crosslinked fluororubber article obtainable is excellent even when an extrusion injection amount is increased. Further, in a case where transfer molding is carried out, excellent effects such as de-aerating action, improvement of fluidity at the time of injection molding, prevention of adhesion during roll processing, improvement of mold release property and reduction of Mooney viscosity, will be obtained.

On the other hand, when the content of the glycerol ester (B) is at most the above upper limit value, a crosslinked fluororubber article is excellent in rubber properties such as tensile strength, tensile elongation and hardness.

### <Additive>

The fluororubber composition preferably contains various additives other than the fluororubber (A) and the glycerol ester (B). The additive may, for example, be a filler (C), an organic peroxide (D), a crosslinking assistant or other additives.

### (Filler (C))

The filler (C) is used to increase the amount of the fluororubber composition. Some of the filler (C) has a function as a reinforcing material, as well as the function to increase the amount of the fluororubber composition.

The filler (C) may, for example, be carbon black, calcium carbonate, clay (aluminum silicate), barium sulfate, talc, silica (silicon dioxide), zinc oxide, magnesium oxide, calcium oxide, calcium hydroxide, boron nitride, hydrotalcite, wollastonite, a fluororesin such as polytetrafluoroethylene or an ethylene/TFE copolymer, glass fiber or carbon fiber. Among them, carbon black is preferred since the property to reinforce a crosslinked fluororubber article is excellent.

Carbon black is not particularly limited so long as it is one usually used as a filler for a rubber.

Carbon black may, for example, be furnace black, acetylene black, thermal black, channel black or graphite. Among them, furnace black or thermal black is preferred since the property to reinforce a crosslinked fluororubber article is more excellent. As a specific example of furnace black or thermal black, HAF-LS, HAF, HAF-HS, FEF, GPF, APF, SRF-LM, SRF-HM or MT may be mentioned.

The filler (C) may be used alone, or two or more of them may be used in combination.

The content of the filler (C) in the fluororubber composition is preferably from 1 to 100 parts by mass, more preferably from 2 to 50 parts by mass, based on 100 parts by mass of the fluororubber (A). The content is preferably from 2 to 35 parts by mass, more preferably from 2 to 25 parts by mass in view of excellent heat aging resistance. When the content of the filler (C) is at least the above lower limit value, the reinforcing property of the crosslinked article becomes excellent, and on the other hand, when the content is at most the above upper limit value, the processability at the time of rubber processing becomes excellent.

In a case where the filler (C) is carbon black, when the content of the carbon black is at least the above lower limit value, the effect of improving hardness can sufficiently be obtained. On the other hand, when it is at most the above upper limit value, a crosslinked fluororubber article is excellent in elongation. Further, in a case where it is used for a material requiring insulating property, such as an electric wire covering material, when it is at most the above upper limit value, it is possible to prevent deterioration of insulating property.

### (Organic peroxide (D))

The organic peroxide (D) is used as a crosslinking agent for the fluororubber (A). When the organic peroxide (D) is used as a crosslinking agent, it is possible to obtain a crosslinked fluororubber article excellent in steam resistance.

The organic peroxide (D) may be one which generates radicals under heating or in the presence of a redox system, and one mainly used as a polymerization initiator, curing agent or cross-linking agent for a resin or synthetic rubber, may be used. Usually, an organic peroxide is a derivative of hydrogen peroxide and, since an oxygen bond is present in its molecule, it is thermally decomposed at a relatively low temperature to readily form free radicals. As reactions to be caused by the formed free radicals, an addition reaction to an unsaturated double bond and a reaction to withdraw hydrogen, etc., may be mentioned. By utilizing the latter hydrogen-withdrawing reaction among these reactions, the organic peroxide is used, for example, as a cross-linking agent or cross-linking accelerator for various synthetic rubbers or synthetic resins or as a modifier for polypropylenes. As organic peroxides to be used for cross-linking for synthetic rubbers, etc., various types of organic peroxides are available, and suitable selection for use is desired in order to avoid decomposition or scorching due to heat history during kneading of a fluororubber composition and further in order to carry out the cross-linking satisfactorily at a predetermined cross-linking temperature and within a predetermined time.

Among them, the organic peroxide (D) is preferably one, of which the temperature at which its half-life period becomes 1 minute, is from 130 to 220°C.

Specific examples of such preferred one include 1,1-bis(t-hexylperoxy)-3,5,5-trimethylcylohexane, 2,5-dimethylhexane-2,5-dihydroperoxide, di-t-butyl peroxide, t-butyl cumyl peroxide, dicumyl peroxide, a,a'-bis(t-butylperoxy)-p-diiospropylbenzene, 2,5-dimethyl-2,5-di(t-butylperoxy)-hexane, 2,5-dimethyl-2,5-di(t-butylperoxy)-hexyne-3, dibenzoyl peroxide, t-butyl peroxybenzoate, 2,5-dimethyl-2,5-di(benzoylperoxy)hexane, t-butyl peroxymaleic acid, t-hexyl peroxyisopropyl monocarbonate, etc.

Among them, a,a'-bis(t-butylperoxy)-p-diiospropylbenzene or 2,5-dimethyl-2,5-di(t-butylperoxy)-hexane is more preferred in that it is excellent in cross-linking properties for fluororubber (A).

The organic peroxide (D) may be used alone, or two or more of them may be used in combination.

The content of the organic peroxide (D) in the fluororubber composition is preferably from 0.1 to 5 parts by mass, more preferably from 0.2 to 4 parts by mass, most preferably from 0.5 to 3 parts by mass, based on 100 parts by mass of the fluororubber (A). When the content of the organic peroxide (D) is at least the above lower limit value, the cross-linking efficiency becomes high, and when the content is at most the above upper limit value, it is possible to suppress the production of inactive decomposition product.

### (Crosslinking assistant)

It is also preferred to incorporate a crosslinking assistant into the fluororubber composition. The crosslinking assistant can improve the crosslinking property of the organic peroxide (D) or the after-mentioned crosslinking agents other than the organic peroxide (D).

As such a crosslinking assistant, a known one may suitably be employed. As a specific example, triallyl cyanurate, triallyl isocyanurate, triacryl formal, triallyl trimellitate, dipropargyl terephthalate, diallyl phthalate, tetraallyl terephthalamide, triallyl phosphate, trimethallyl isocyanurate, 1,3,5-triacryloylhexahydro-1,3,5-triazine, m-phenylenediamine bismaleimide, p-quinone dioxime, p,p'-dibenzoylquinone dioxime, dipropargyl terephthalate, N,N',N",N"'-tetraallyl terephthalamide, a vinyl group-containing siloxane oligomer such as polymethyl vinyl siloxane or polymethylphenyl vinyl siloxane, may be mentioned.

Among them, at least one member selected from the group consisting of triallyl cyanurate, triallyl isocyanurate and trimethallyl isocyanurate is preferred, and triallyl isocyanurate is most preferred, from the viewpoint of crosslinking efficiency.

One of such crosslinking assistants may be used alone, or two or more of them may be used in combination.

The content of the crosslinking assistant in the fluororubber composition is preferably from 0.1 to 30 parts by mass, more preferably from 1 to 20 parts by mass, further preferably from 3.5 to 10 parts by mass, based on 100 parts by mass of the fluororubber (A). When the content of the crosslinking assistant is at least the lower limit value, a good crosslinking rate is readily obtainable, and a good crosslinking degree is readily attainable. When it is at most the upper limit value in the above range, the crosslinked fluororubber article is excellent in physical properties such as elongation.

### (Other additives)

As other additives, a processing assistant other than the glycerol ester (B), a crosslinking agent other than the organic peroxide (D), an acid acceptor, a glidant, a lubricant, a flame retardant, an antistatic agent, a colorant, etc. may be mentioned.

The processing assistant other than the glycerol ester (B) may, for example, be an alkali metal salt of a higher fatty acid. As a specific example of an alkali metal salt of a higher fatty acid, stearic acid salt or lauric acid salt may be mentioned. These alkali metal salts are usually used as a processing assistant for improving mold release property.

The content of the processing assistant other than the glycerol ester (B) in the fluororubber composition is preferably from 0.1 to 20 parts by mass, more preferably from 0.2 to 10 parts by mass, furthermore preferably from 1 to 5 parts by mass, based on 100 parts by mass of the fluororubber (A).

As the crosslinking agent other than the organic peroxide (D), a polyol crosslinking agent may, for example, be mentioned.

As the crosslinking agent, the organic peroxide (D) or a crosslinking agent other than the organic peroxide (D) may be used, or both of them may be used in combination.

The content of the crosslinking agent other than the organic peroxide (D) in the fluororubber composition is preferably from 0.01 to 20 parts by mass, more preferably from 0.05 to 10 parts by mass, most preferably from 0.1 to 5 parts by mass, based on 100 parts by mass of the fluororubber (A).

### <Production process>

A process for producing the fluororubber composition is not particularly limited, and a known process may suitably be employed.

As a specific example, it is preferred to employ a method of kneading the fluororubber (A), the glycerol ester (B), the filler (C), the organic peroxide (D), the crosslinking assistant and other additives, by using a kneading machine such as a twin roll, a banbury mixer or a kneader. Further, a method of mixing them in such a state as dissolved or dispersed in a solvent may be employed.

The order for addition of the respective components is not particularly limited, but it is preferred that firstly the filler (C) or another additive (except for a crosslinking agent other than the organic peroxide (D)), as a component hardly reactive or decomposable by heating during kneading, is sufficiently kneaded with the fluororubber (A) and then, the organic peroxide (D) and/or a crosslinking agent other than the organic peroxide (D), as a readily reactive or decomposable component, is added thereto and kneaded therewith. Further, it is preferred that a part or all of the glycerol ester (B) is mixed with the filler (C) and then mixed with other components in view of roll processability.

During the kneading, it is preferred to cool the kneading machine with water to maintain the temperature at a level of at most 120°C at which the organic peroxide (D) and the crosslinking agent other than the organic peroxide (D) are less likely to be decomposed.

A kneading time is preferably from one minute to three hours, more preferably from five minutes to one hour. Further, a kneading temperature is at most 120°C, preferably from 40 to 100°C.

### <Application>

The fluororubber composition of the present invention, which is excellent in surface smoothness in extrusion, heat resistance and transfer molding property, can be used for production of various crosslinked fluororubber articles, such as a seal/packing product such as an electric wire-coating material, a hose, a tube, a gasket, an oil seal, a grommet, a sheet, a cover, a diaphragm and an O-ring.

### [Crosslinked fluororubber article]

The crosslinked fluororubber article of the present invention is one obtained by forming and crosslinking the above-mentioned fluororubber composition.

### <Forming method>

Forming method is carried out by a known method depending on the purpose. For example, press molding, injection molding, extrusion or transfer molding may be mentioned. Among them, injection molding, extrusion or transfer molding is preferred, extrusion or transfer molding is more preferred, and extrusion is particularly preferred in view of productivity.

In the case of extrusion, it is possible to increase an extrusion discharge amount by using the fluororubber composition of the present invention. The extrusion discharge amount is determined as an extrusion discharge amount of a fluororubber composition per minute (m/min), in the extrusion under the following conditions, by using e.g. a rubber extruder (model: 40G-12D-HB, manufactured by MITSUBA MFG. CO., LTD.).
Screw diameter: ϕ40 mm
Die outlet diameter: ϕ6 mm
Temperature: head 85°C, cylinder 85°C, screw 80°C
Screw speed: 50 rpm

The extrusion discharge amount determined under the above conditions, is preferably at least 5 m/min, more preferably at least 5.5 m/min. Further, the larger the discharge amount is, the better it becomes, and the upper limit is not particularly limited, but is more preferably at most 20 m/min.

### <Crosslinking method>

The crosslinking method is not particularly limited, and a known crosslinking method may be employed by using e.g. the above-mentioned organic peroxide (D) and/or crosslinking agent other than the organic peroxide (D). Specifically, hot press crosslinking, steam crosslinking, hot air crosslinking or lead-covered crosslinking may, for example, be employed in consideration of the forming method and the shape of a crosslinked fluororubber article.

Crosslinking conditions are such that heating is carried out at from 100 to 400°C, preferably from 130 to 200°C for from a few seconds to 24 hours, preferably from one minute to one hour.

Further, it is also preferred to carry out secondary cross-linking for the purpose of improving the mechanical properties, improving the compression permanent strain or stabilizing other properties of the crosslinked fluororubber article. With respect to the secondary cross-linking conditions, it is possible to employ a method of heating e.g. at from 100 to 300°C for from 30 minutes to 48 hours.

Further, a crosslinking method using no organic peroxide (D) and crosslinking agent other than the organic peroxide (D), may, for example, be electron-beam crosslinking. The lectron-beam crosslinking is carried out under the conditions of preferably from 60 to 200 kGy, more preferably from 80 to 160 kGy.

The tensile strength of the crosslinked fluororubber article obtained by the measurement method described in the after-mentioned Examples, is preferably at least 9 MPa, more preferably at least 10 MPa, furthermore preferably at least 12 MPa, particularly preferably at least 14 MPa. The upper limit is not particularly limited, but is preferably at most 40 MPa.

The tensile elongation of the crosslinked fluororubber article by a measurement method described in the after-mentioned Examples, is preferably at least 100%, more preferably at least 150%, particularly preferably at least 200%. The upper limit is not particularly limited, but is preferably at most 500%.

Particularly in the case of using it as an electric wire-covering material, the strength remaining proportion of the crosslinked fluororubber article after an aging test (230°C×168 hours) as described in the after-mentioned Examples, is preferably at least 60%, more preferably at least 70%, particularly preferably at least 80%.

Further, the elongation remaining proportion of the crosslinked fluororubber article after the aging test (230°C×168 hours) is preferably at least 60%, more preferably at least 70%, particularly preferably at least 80%.

### [Advantageous effects]

The fluororubber composition of the present invention is excellent in formability since it contains the glycerol ester (B) among various processing assistants. Further, a crosslinked fluororubber article obtained by using the fluororubber composition of the present invention is excellent in surface smoothness, excellent in tensile strength, tensile elongation and hardness, and also excellent in heat resistance. It is presumed that the melting point of the glycerol ester (B) is related to this mechanism.

The glycerol ester (B), which is an ester formed from a fatty acid having an unsaturated carbon bond, has a lower melting point than other processing assistants having no unsaturated carbon bonds. According to the processing assistant having such a lower melting point, it is possible to decrease the viscosity of a kneaded product of the fluororubber composition during forming even with a small amount of the processing assistant, whereby it is easy to carry out extrusion. Therefore, in a case where extrusion is carried out, the extrusion discharge amount increases, whereby it is possible to improve the surface smoothness of the crosslinked fluororubber article obtainable. Likewise, the viscosity of the kneaded product is decreased also in other various molding methods, and therefore the formability becomes good, and it is possible to improve the surface smoothness of the crosslinked fluororubber article.

Further, it is possible to improve the surface smoothness even with a small amount of the glycerol ester (B), and therefore the resulting crosslinked fluororubber article is free from deterioration in rubber properties such as strength.

### EXAMPLES

Now, the present invention will be described in further detail with reference to Examples, but it should be understood that the present invention is by no means restricted to such specific Examples.

Ex. 5 to 8, 11 to 18, 20, 22, 24 and 26 are Examples of the present invention, and Ex. 1 to 4, 9, 10, 19, 21, 23 and 25 are Comparative Examples.

### [Evaluation methods]

### <Evaluation of properties of fluororubber composition>

### (Extrusion discharge amount)

An extrusion discharge amount (m/min) per minute of a fluororubber composition when extrusion was carried out under the following conditions by using a rubber extruder (model: 40G-12D-HB, manufactured by MITSUBA MFG. CO., LTD.) was obtained.
Screw diameter: ϕ40 mm
Die outlet diameter: ϕ6 mm
Temperature: head 85°C, cylinder 85°C, screw 80°C
Screw speed: 50 rpm

### <Surface smoothness>

### (Surface smoothness of non-crosslinked article obtained by extrusion)

Using a rubber extruder (model: 40G-12D-HB, manufactured by MITSUBA MFG. CO., LTD.), extrusion was carried out under the same conditions of the above-mentioned extrusion discharge amount, whereby a non-crosslinked article was obtained.

The surface smoothness of the non-crosslinked article obtained was visually evaluated. A case where the surface of the non-crosslinked article was smooth, was evaluated as "good", and a case where the surface was not smooth since irregularity was observed, was evaluated as "poor".

### (Surface smoothness of non-crosslinked article obtained by transfer molding)

In a mold for transfer molding of a columnar formed product having a product dimension of 200 mm × ϕ40 mm, molding was carried out under conditions of 160°C × 60 minutes, followed by releasing from the mold to obtain a non-crosslinked article.

The surface smoothness of the non-crosslinked article obtained was visually evaluated. A case where the surface of the non-crosslinked article was smooth, was evaluated as "good", and a case where the surface was not smooth since irregularity was observed, was evaluated as "poor".

### <Property evaluation of crosslinked fluororubber article>

### [Tensile strength and tensile elongation]

In accordance with JIS K6251:2004, a test piece in a No. 3 dumbbell shape, punched out from a sheet-form crosslinked fluororubber article having a thickness of 2 mm was subjected to a tensile test at room temperature by using Quick Reader, manufactured by Ueshima Seisakusho Co., Ltd., whereby the tensile strength at break (MPa) and the elongation at break (%) were measured.

### (Heat aging resistance test)

In accordance with JIS K6257: 2003, a test sample was heated at 230°C for 168 hours, then it was left to cool to room temperature, and the tensile strength (MPa) and the tensile elongation at break (%) were measured as mentioned above.

The evaluation was carried out by obtaining a proportion (%) of the tensile strength (hereinafter, also referred to as "strength remaining proportion") and a proportion (%) of the tensile elongation (hereinafter, also referred to as "elongation remaining proportion") after the heat aging resistance test.

### (Hardness)

In accordance with JIS K6253:1997, by overlaying three sheets of a sheet-form crosslinked fluororubber article having a thickness of 2 mm, the hardness was measured by using Durometer Type A (manufactured by Bareiss K.K) at 23°C.

### [Material]

### <Fluororubber>

Fluororubber A1: TFE/propylene copolymer (molar ratio of TFE units/propylene units: 55/45, total of TFE units and propylene units to all units: 100 mol%, fluorine content: 57 mass%, Mooney viscosity is not measurable, G': 490, glass transition temperature: -3°C).

Fluororubber A2: TFE/propylene copolymer (molar ratio of TFE units/propylene units: 55/45, total of TFE units and propylene units to all units: 100 mol%, fluorine content: 57 mass%, Mooney viscosity: 60, G': 160, glass transition temperature: -3°C).

Fluororubber A3: TFE/propylene copolymer (molar ratio of TFE units/propylene units: 56/44, total of TFE units and propylene units to all units: 100 mol%, fluorine content: 57 mass%, Mooney viscosity: 138, G': 300, glass transition temperature: -3°C).

Fluororubber A4: TFE/propylene copolymer (molar ratio of TFE units/propylene units: 55/45, total of TFE units and propylene units to all units: 100 mol%, fluorine content: 57 mass%, Mooney viscosity: 95, G': 240, glass transition temperature: -3°C).

Fluororubber A5: TFE/propylene copolymer containing iodine atoms (molar ratio of TFE units/propylene units: 56/44, total of TFE units and propylene units to all units: 100 mol%, fluorine content: 57 mass%, iodine content: 0.20 mass%, Mooney viscosity: 138, G': 300, glass transition temperature: -3°C).

The fluororubber A5 was produced by the following Production Example 1.

### [Production Example 1]

The interior of a stainless steel pressure resistant reactor having an internal capacity of 3,200 mL and provided with stirring anchor vanes, was deaerated, and then, to the reactor, 1,500 g of ion exchanged water, 59 g of disodium hydrogenphosphate dodecahydrate, 0.7 g of sodium hydroxide, 197 g of tert-butanol, 9 g of sodium lauryl sulfate, 3.5 g of 1,4-diiodoperfluorobutane and 6 g of ammonium persulfate were added. Further, an aqueous solution having 0.4 g of disodium ethylenediaminetetraacetate dihydrate (hereinafter referred to as EDTA) and 0.3 g of ferrous sulfate heptahydrate dissolved in 100 g of ion exchanged water, was added to the reactor. The pH of the aqueous medium in the reactor at that time was 9.5.

Then, a monomer mixed gas of TFE/P: 88/12 (molar ratio) was injected under pressure at 25°C so that the internal pressure of the reactor would be 2.50 MPaG. The anchor vanes were rotated at 300 rpm, and then, a 2.5 mass% aqueous solution of sodium hydroxymethanesulfinate dihydrate (hereinafter referred to as Rongalite) having the pH adjusted to 10.0 with sodium hydroxide (hereinafter referred to as a Rongalite 2.5 mass% aqueous solution) was added to the reactor, and the polymerization reaction was initiated. Thereafter, the Rongalite 2.5 mass% aqueous solution was continuously added to the reactor by using a high pressure pump.

When the total amount of the TFE/P monomer mixed gas injected under pressure became 1,000 g, addition of the Rongalite 2.5 mass% aqueous solution was terminated, and the internal temperature of the reactor was cooled to 10°C to terminate the polymerization reaction thereby to obtain a latex of a fluororubber A5. The amount of the Rongalite 2.5 mass% aqueous solution added was 68 g. The polymerization time was 6 hours.

To the latex, a 5 mass% aqueous solution of calcium chloride was added thereby to agglomerate the latex of the fluororubber A5, whereby the fluororubber A5 was precipitated. The fluororubber A5 was recovered by filtration. Then, the fluororubber A5 was washed with ion exchanged water and dried for 15 hours in an oven of 100°C to obtain 980 g of the white fluororubber A5.

Fluororubber A6: TFE/perfluoro(methyl vinyl ether) copolymer (molar ratio of TFE units/perfluoro(methyl vinyl ether) units: 76/24, total of TFE units and perfluoro(methyl vinyl ether) units to all units: 100 mol%, fluorine content: 74 mass%, iodine content: 0.20 mass%, Mooney viscosity: 108, G': 490, glass transition temperature: -4.0°C). The fluororubber A6 was produced in accordance with the production process as described in WO2010/082633.

Fluororubber A7: TFE/perfluoro(methyl vinyl ether) copolymer (molar ratio of TFE units/perfluoro(methyl vinyl ether) units: 68/32, total of TFE units and perfluoro(methyl vinyl ether) units to all units: 100 mol%, fluorine content: 74 mass%, iodine content: 0.36 mass%, Mooney viscosity: 103, G': 450, glass transition temperature: -4.7°C). The fluororubber A7 was produced in accordance with the production process as described in Japanese Patent No. 5061446.

### <Organic peroxide>

Organic peroxide D1: a,a'-bis(t-butylperoxy)-p-diisopropylbenzene ("Perkadox 14R-P" manufactured by Kayaku Akzo Corporation).

Organic peroxide D2: 2,5-dimethyl-2,5-di(t-butylperoxy)hexane ("Perhexa 25B" manufactured by NOF Corporation).

### <Crosslinking assistant 1>

Triallyl isocyanurate (TAIC) (manufactured by Nippon Kasei Chemical Co., Ltd.).

### <Processing assistant>

### (For improvement of mold release property)

Processing assistant B'1: calcium stearate (manufactured by Kishida Chemical Co., Ltd.).

Processing assistant B'2: sodium stearate (manufactured by NOF Corporation).

### (For improvement of surface property)

Processing assistant B3: mixture of glycerol monooleate and silica ("Emaster510P" manufactured by RIKEN VITAMIN CO., LTD., glycerol monooleate/silica (mass ratio): 64/36).

Processing assistant B'4: mixture of glycerol monostearate and glycerol distearate ("Rikemal S200" manufactured by RIKEN VITAMIN CO., LTD., content of glycerol monostearate: 45 to 55 mass%).

Processing assistant B'5: polyethylene wax ("AC polyethylene" manufactured by Honeywell).

Processing assistant B'6: pentaerithritol fatty acid ester ("Emaster430W" manufactured by RIKEN VITAMIN CO., LTD.).

### <Filler (C)>

Clay 1: "ST-100" manufactured by Shiraishi Calcium Kaisha, Ltd.

Silica 1: "Aerosil R8200" manufactured by Nippon Aerosil Co., Ltd.

Carbon black 1: "Thermax N990" (MT carbon) manufactured by Cancarb.

Carbon black 2: "Asahi #35" (SRF carbon) manufactured by Asahi Carbon Co., Ltd.

### <Flame retardant 1>

Antimony trioxide ("Fire Cut AT-3" manufactured by Suzuhiro Chemical Co., Ltd.).

### [Ex. 1 to 13]

Components in a compounding formulation shown in Table 1 were kneaded for 10 minutes by an open roll to prepare a fluororubber composition. From the fluororubber composition prepared, a non-crosslinked article was obtained by a rubber extruder. At that time, an extrusion discharge amount was measured and evaluated. Further, the resulting non-crosslinked article was subjected to evaluation of surface smoothness.

Then, the resulting fluororubber composition was set on a die heated to 190°C, and held at 190°C for 5 minutes by using a hot pressing device so as to be crosslinked. Then, the die was taken out from the hot pressing device, and the crosslinked fluororubber article (a sheet having a thickness of 2 mm) was removed from the die. With respect to the resulting crosslinked fluororubber article, the tensile strength, the tensile elongation and the hardness were measured and evaluated.

The evaluation results are shown in Table 1.

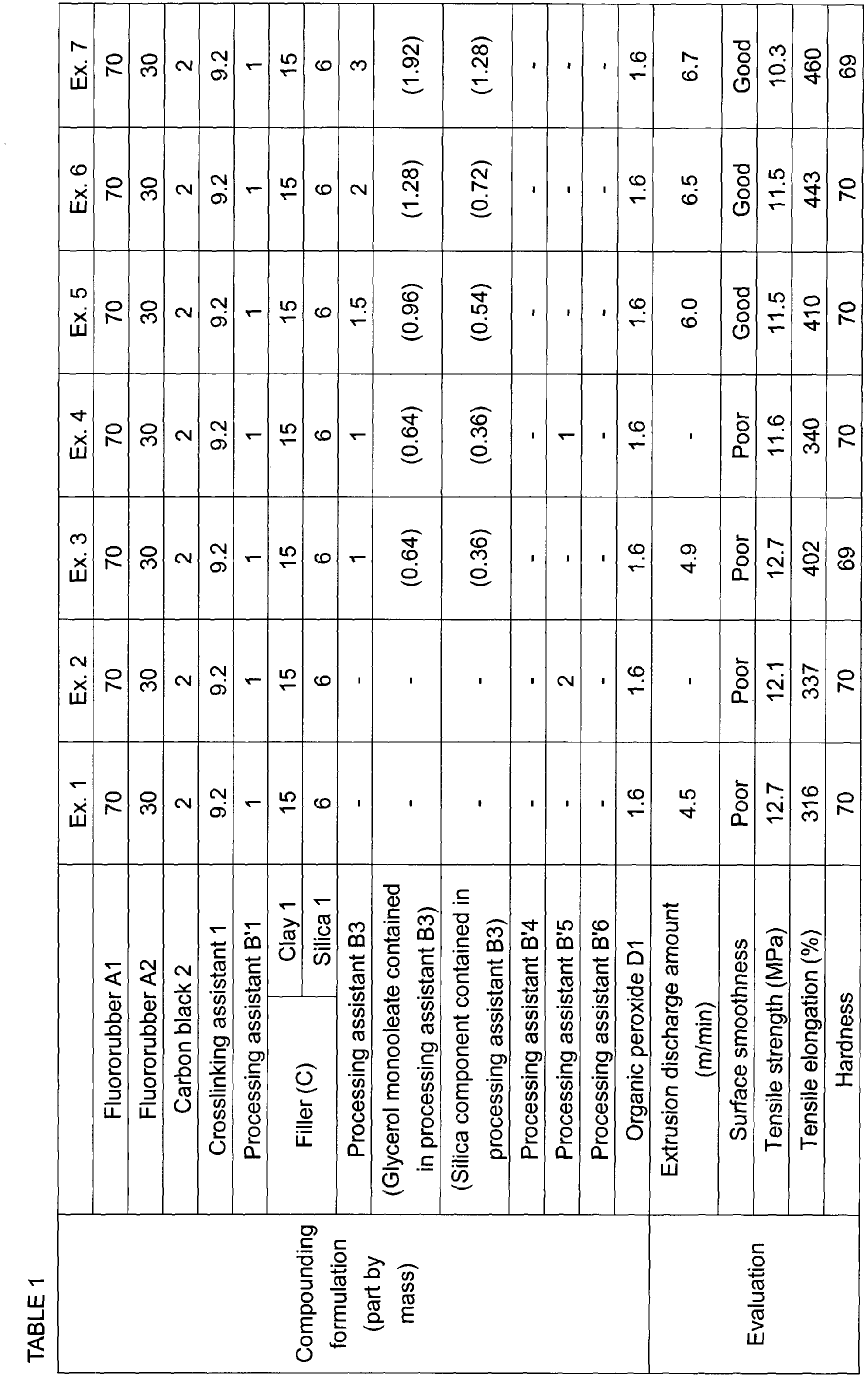

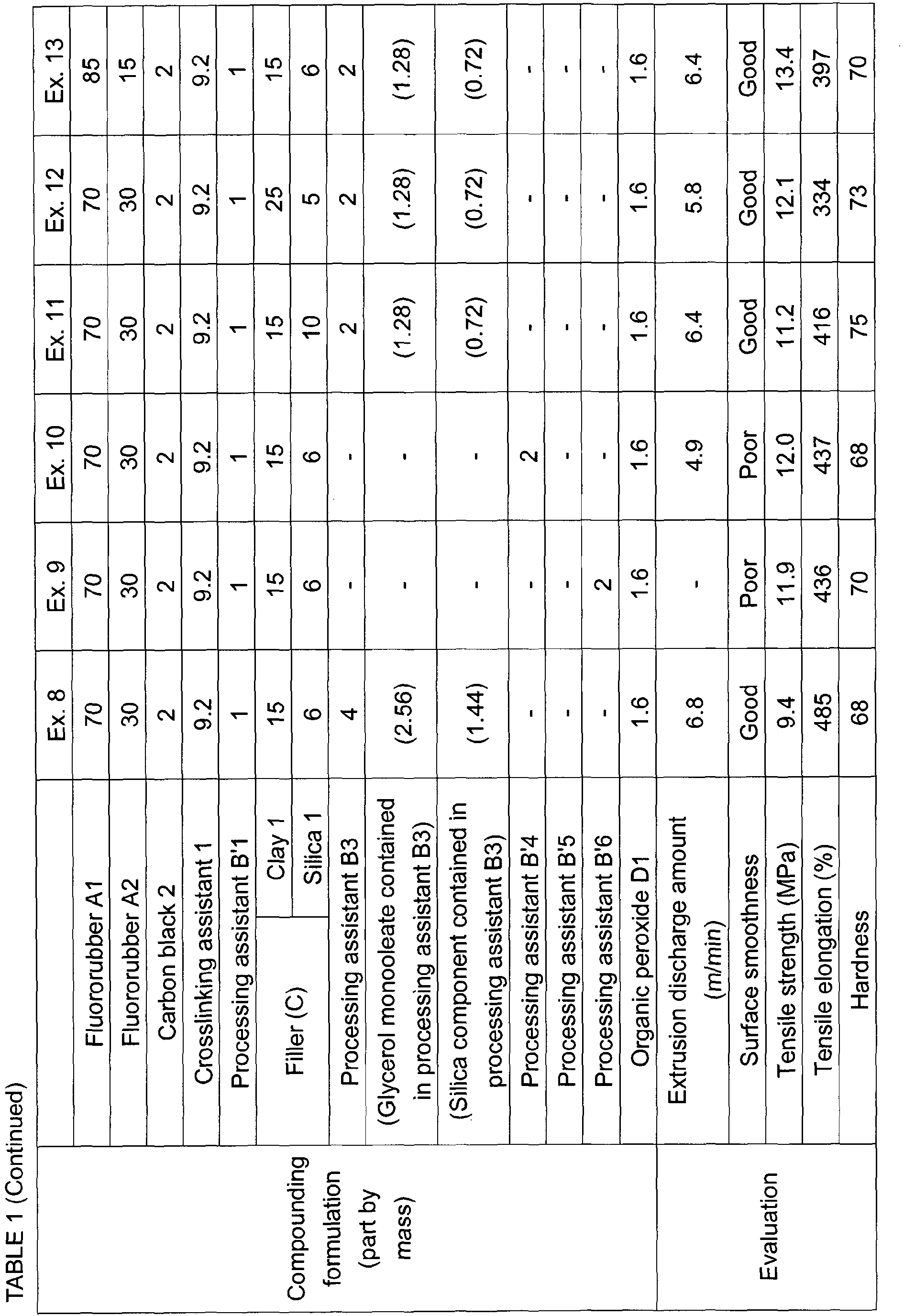

### [Ex. 14 to 18]

Components in a compounding formulation shown in Table 2 were kneaded for 10 minutes by an open roll to prepare a fluororubber composition. The fluororubber composition prepared was set on a die heated to 100°C, held at 100°C for one minute by using a hot pressing device, then the die was taken out from the hot pressing device, and a non-crosslinked article (a sheet having a thickness of 2 mm) was removed from the die. The resulting non-crosslinked article was subjected to electron radiation under the conditions of 160 kGy so as to be crosslinked. With respect to the resulting sheet-form crosslinked fluororubber article, the tensile strength, the tensile elongation, the strength remaining proportion and the elongation remaining proportion were measured and evaluated. The evaluation results are shown in Table 2.

**TABLE 2**

| | | | | | | | |
|---|---|---|---|---|---|---|---|
| Compounding formulation (part by mass) | | | Ex. 14 | Ex. 15 | Ex. 16 | Ex. 17 | Ex. 18 |
| | Fluororubber A3 | | 100 | 100 | 100 | 70 | 100 |
| | Fluororubber A1 | | - | - | - | 30 | - |
| | Crosslinking assistant 1 | | 7.5 | 7.5 | 5 | 5 | 5 |
| | Processing assistant B'2 | | 1 | 1 | 1 | 1 | 1 |
| | Flame retardant 1 | | 25 | 25 | 25 | 25 | 25 |
| | Processing assistant B3 | Glycerol monooleate | 1.28 | 1.28 | 1.28 | 1.28 | 1.28 |
| | | Silica (filler component) | 0.72 | 0.72 | 0.72 | 0.72 | 0.72 |
| | Filler component | Carbon black 2 | 3 | 3 | 3 | - | - |
| | | Clay 1 | 10 | 15 | 10 | 10 | 30 |
| | | Silica 1 | - | - | 5 | 10 | - |
| | Total of filler component | | 13.72 | 18.72 | 18.72 | 20.72 | 30.72 |
| Evaluation | Surface smoothness | | Good | Good | Good | Good | Good |
| | Tensile strength (MPa) | | 14.2 | 15.9 | 13.1 | 12.9 | 12.9 |
| | Tensile elongation (%) | | 230 | 225 | 227 | 255 | 280 |
| | Strength remaining proportion (%) | | 114 | 105 | 130 | 138 | 91 |
| | Elongation remaining proportion (%) | | 82 | 77 | 85 | 75 | 73 |

### [Ex. 19 and 20]

Components in a compounding formulation shown in Table 3 were kneaded for 10 minutes by an open roll to prepare a fluororubber composition. The fluororubber composition prepared was subjected to transfer molding to obtain a non-crosslinked article. The surface smoothness of the resulting non-crosslinked article was evaluated.

Then, the resulting fluororubber composition was set on a die heated to 170°C, and held at 170°C for 20 minutes by using a hot pressing device so as to be crosslinked, whereby a primary crosslinked article (a sheet having a thickness of 2 mm) was obtained. Then, the die was taken out from the hot pressing device, and the primary crosslinked article was removed from the die. The resulting primary crosslinked article was heated at 200°C for 4 hours in the air atmosphere by using an electric furnace so as to carry out secondary crosslinking treatment, whereby a sheet-form crosslinked article having a thickness of 2 mm was obtained.

With respect to the resulting crosslinked fluororubber article, the tensile strength, the tensile elongation and the hardness were measured. Evaluation results are shown in Table 3. Here, the surface smoothness shown in Table 3 shows the result with respect to the composition extruded.

**TABLE 3**

| | | Ex. 19 | Ex. 20 |
|---|---|---|---|
| Compounding formulation (part by mass) | Fluororubber A4 | 100 | 100 |
| | Carbon black 1 | 10 | 10 |
| | Crosslinking assistant 1 | 5 | 5 |
| | Processing assistant B'1 | 2 | 2 |
| | Processing assistant B3 | - | 2 |
| | (Glycerol monooleate contained in processing assistant B3) | - | (1.28) |
| | (Silica component contained in processing assistant B3) | - | (0.72) |
| | Organic peroxide D1 | 1 | 1 |
| Evaluation | Surface smoothness | Poor | Good |
| | Tensile strength (MPa) | 20 | 18.1 |
| | Tensile elongation (%) | 329 | 340 |
| | Hardness | 63 | 62 |

As shown in Table 1, in Ex. 5 to 8 and 11 to 13 where from 0.96 to 2.56 parts by mass of glycerol monooleate was blended, based on 100 parts by mass of a fluororubber, the surface smoothness of a non-crosslinked fluororubber article was good even when the extrusion discharge amount was large. Further, in Ex. 5 to 8 and 11 to 13, the rubber properties such as the tensile strength, the tensile elongation and the hardness were sufficiently maintained.

On the other hand, in Ex. 3 and 4 where 0.64 part by mass of glycerol monooleate was blended, based on 100 parts by mass of a fluororubber, the surface smoothness was poor.

Further, in Ex. 10 where the processing assistant B'4 (a mixture of glycerol monostearate and glycerol distearate) was blended, in Ex. 2 and 4 where the processing assistant B'5 (polyethylene wax) was blended, and in Ex. 9 where the processing assistant B'6 (pentaerithritol fatty acid ester) was blended, instead of glycerol monooleate, the surface smoothness was poor. Moreover, it was also difficult to increase the extrusion discharge amount.

Further, also in Ex. 1 where neither glycerol monooleate nor B'4 to B'6 were blended, the surface smoothness was poor.

As shown in Table 2, in Ex. 14 to 18 where 1.28 parts by mass of glycerol monooleate was blended, based on 100 parts by mass of a fluororubber, the surface smoothness was good. Further, in Ex. 14 to 18, the tensile strength and the tensile elongation, and the strength remaining proportion and the elongation remaining proportion, were sufficiently maintained. Especially in Ex. 14 to 17, the strength remaining proportion and the elongation remaining proportion were high, and the heat aging resistance was thereby excellent.

As shown in Table 3, in Ex. 20 where 1.28 parts by mass of glycerol monooleate was blended, based on 100 parts by mass of a fluororubber, and where the transfer molding was carried out, the surface smoothness of a non-crosslinked fluororubber article was good. Further, in Ex. 20, the rubber properties such as the tensile strength, the tensile elongation and the hardness were sufficiently maintained.

On the other hand, in Ex. 19 where no glycerol monooleate was blended, the surface smoothness was poor.

### [Ex. 21 to 26]

Components in a compounding formulation shown in Table 4 were kneaded for 10 minutes by an open roll to prepare a fluororubber composition. From the fluororubber composition prepared, a non-crosslinked article was obtained by a rubber extruder. The resulting non-crosslinked article was subjected to evaluation of surface smoothness.

Then, the resulting fluororubber composition was set on a die heated to 170°C, and held at 170°C for 10 minutes by using a hot pressing device so as to be crosslinked. Then, the die was taken out from the hot pressing device, and the crosslinked fluororubber article (a sheet having a thickness of 2 mm) was removed from the die. With respect to the resulting crosslinked fluororubber article, the tensile strength, the tensile elongation and the hardness were measured and evaluated.

The evaluation results are shown in Table 4.

**TABLE 4**

| | | Ex. 21 | Ex. 22 | Ex. 23 | Ex. 24 | Ex. 25 | Ex. 26 |
|---|---|---|---|---|---|---|---|
| Compounding formulation (part by mass) | Fluororubber A5 | 100 | 100 | - | - | - | - |
| | Fluororubber A6 | - | - | 100 | 100 | - | - |
| | Fluororubber A7 | - | - | - | - | 100 | 100 |
| | Carbon black 1 | 25 | 25 | 10 | 10 | 10 | 10 |
| | Crosslinking assistant 1 | 5 | 5 | 3 | 3 | 3 | 3 |
| | Processing assistant B'1 | 1 | 1 | 1 | 1 | 1 | 1 |
| | Processing assistant B3 | - | 2 | - | 2 | - | 2 |
| | (Glycerol monooleate contained in processing assistant B3) | - | (1.28) | - | (1.28) | - | (1.28) |
| | (Silica component contained in processing assistant B3) | - | (0.72) | - | (0.72) | - | (0.72) |
| | Organic peroxide D1 | 1.5 | 1.5 | - | - | - | - |
| | Organic peroxide D2 | - | - | 1 | 1 | 1 | 1 |
| Evaluation | Surface smoothness | Poor | Good | Poor | Good | Poor | Good |
| | Tensile strength (MPa) | 16.1 | 15.7 | 22.1 | 20.2 | 24.3 | 22.1 |
| | Tensile elongation (%) | 365 | 411 | 195 | 205 | 200 | 210 |
| | Hardness | 73 | 71 | 74 | 73 | 74 | 73 |

As shown in Table 4, in Ex. 22, 24 and 26 where 1.28 parts by mass of glycerol monooleate was blended, based on 100 parts by mass of a fluororubber, the surface smoothness of the non-crosslinked fluororubber article was good. Further, in Ex. 22, 24 and 26, the rubber properties such as the tensile strength, the tensile elongation and the hardness were sufficiently maintained.

On the other hand, in Ex. 21, 23 and 25 where no glycerol monooleate was blended, the surface smoothness was poor.

The fluororubber composition of the present invention is excellent in surface smoothness of an extruded product, has good heat resistance, and is also in excellent in transfer molding property. Therefore it is useful for e.g. various seal and packing products such as an electric wire-covering material, a hose, a tube, a gasket, an oil seal, a grommet, a sheet, a cover, a diaphragm and an O-ring.

## Claims

1. A fluororubber composition comprising a fluororubber (A) and a glycerol ester (B) of a C₁₄₋₂₀ unsaturated fatty acid, wherein the content of the glycerol ester (B) is from 0.9 to 2.6 parts by mass, based on 100 parts by mass of the fluororubber (A),
wherein the glycerol ester (B) is either one or both of a glycerol monoester and a glycerol diester.

2. The fluororubber composition according to Claim 1, wherein the C₁₄₋₂₀ unsaturated fatty acid is at least one member selected from the group consisting of palmitoleic acid, oleic acid and vaccenic acid.

3. The fluororubber composition according to Claim 1 or 2, wherein the glycerol ester (B) is either one or both of oleic acid monoglyceride and oleic acid diglyceride.

4. The fluororubber composition according to any one of Claims 1 to 3, which further contains a filler (C), wherein the content of the filler (C) is from 1 to 100 parts by mass, based on 100 parts by mass of the fluororubber (A).

5. The fluororubber composition according to Claim 4, wherein the filler is at least one member selected from the group consisting of furnace black and thermal black.

6. The fluororubber composition according to any one of Claims 1 to 5, which further contains an organic peroxide (D), wherein the content of the organic peroxide (D) is from 0.1 to 5 parts by mass, based on 100 parts by mass of the fluororubber (A).

7. The fluororubber composition according to Claim 6, wherein the organic peroxide is a,a'-bis(t-butylperoxy)-p-diisopropylbenzene or 2,5-dimethyl-2,5-di(t-butylperoxy)hexane.

8. The fluororubber composition according to any one of Claims 1 to 7, wherein the fluororubber (A) is at least one member selected from the group consisting of a tetrafluoroethylene/propylene copolymer, a tetrafluoroethylene/propylene/vinylidene fluoride copolymer, a vinylidene fluoride/hexafluoropropylene copolymer, a vinylidene fluoride/tetrafluoroethylene/hexafluoropropylene copolymer, a vinylidene fluoride/2,3,3,3-tetrafluoropropene copolymer and a tetrafluoroethylene/perfluoro(alkyl vinyl ether) copolymer.

9. The fluororubber composition according to any one of Claims 1 to 8, wherein the fluororubber (A) contains units based on tetrafluoroethylene and units based on propylene, wherein the molar ratio of the units based on tetrafluoroethylene to the units based on propylene, is from 40/60 to 70/30.

10. The fluororubber composition according to any one of Claims 1 to 9, wherein the fluororubber (A) contains iodine atoms, wherein the content of iodine is from 0.01 to 5.0 mass%.

11. A crosslinked fluororubber article obtained by crosslinking the fluororubber composition as defined in any one of Claims 1 to 10.

12. The crosslinked fluororubber article according to Claim 11, which has a tensile strength of at least 9 MPa, a tensile elongation of at least 100% and an elongation remaining proportion after a heat aging resistance test (230°C×168 hours) of at least 60%,
wherein the tensile strength and the tensile elongation are determined according to JIS K6251:2004, and the elongation remaining proportion after a heat aging resistance test is determined according to JIS K6257:2003 and JIS K6251:2004.

## Patentansprüche

1. Fluorkautschukzusammensetzung, umfassend einen Fluorkautschuk (A) und einen Glycerinester (B) einer C₁₄₋₂₀ ungesättigten Fettsäure, wobei der Gehalt des Glycerinesters (B) von 0,9 bis 2,6 Massenteile, bezogen auf 100 Massenteile des Fluorkautschuks (A), beträgt,
wobei der Glycerinester (B) entweder eines oder beides von einem Glycerinmonoester und einem Glycerindiester ist.

2. Fluorkautschukzusammensetzung nach Anspruch 1, wobei die C₁₄₋₂₀ ungesättigte Fettsäure mindestens ein Mitglied, ausgewählt aus der Gruppe, bestehend aus Palmitoleinsäure, Ölsäure und Vaccensäure, ist.

3. Fluorkautschukzusammensetzung nach Anspruch 1 oder 2, wobei der Glycerinester (B) entweder eines oder beides von Ölsäuremonoglycerid und Ölsäurediglycerid ist.

4. Fluorkautschukzusammensetzung nach einem der Ansprüche 1 bis 3, die weiter einen Füllstoff (C) enthält, wobei der Gehalt des Füllstoffs (C) von 1 bis 100 Massenteile, bezogen auf 100 Massenteile des Fluorkautschuks (A), beträgt.

5. Fluorkautschukzusammensetzung nach Anspruch 4, wobei der Füllstoff mindestens ein Mitglied, ausgewählt aus der Gruppe, bestehend aus Ofenruß und Spaltruß, ist.

6. Fluorkautschukzusammensetzung nach einem der Ansprüche 1 bis 5, die weiter ein organisches Peroxid (D) enthält, wobei der Gehalt des organischen Peroxids (D) von 0,1 bis 5 Massenteile, bezogen auf 100 Massenteile des Fluorkautschuks (A), beträgt.

7. Fluorkautschukzusammensetzung nach Anspruch 6, wobei das organische Peroxid α,α'-Bis(t-butylperoxy)-p-diisopropylbenzol oder 2,5-Dimethyl-2,5-di(t-butylperoxy)hexan ist.

8. Fluorkautschukzusammensetzung nach einem der Ansprüche 1 bis 7, wobei der Fluorkautschuk (A) mindestens ein Mitglied, ausgewählt aus der Gruppe, bestehend aus einem Tetrafluorethylen/Propylen-Copolymer, einem Tetrafluorethylen/Propylen/Vinylidenfluorid-Copolymer, einem Vinylidenfluorid/Hexafluorpropylen-Copolymer, einem Vinylidenfluorid/Tetrafluorethylen/Hexafluorpropylen-Copolymer, einem Vinylidenfluorid/2,3,3,3-Tetrafluorpropen-Copolymer und einem Tetrafluorethylen/Perfluor(alkylvinylether)-Copolymer, ist.

9. Fluorkautschukzusammensetzung nach einem der Ansprüche 1 bis 8, wobei der Fluorkautschuk (A) Einheiten, die auf Tetrafluorethylen basieren, und Einheiten, die auf Propylen basieren, enthält, wobei das Molverhältnis der Einheiten, die auf Tetrafluorethylen basieren, zu den Einheiten, die auf Propylen basieren, von 40/60 bis 70/30 beträgt.

10. Fluorkautschukzusammensetzung nach einem der Ansprüche 1 bis 9, wobei der Fluorkautschuk (A) lodatome enthält, wobei der Gehalt an lod von 0,01 bis 5,0 Massen% beträgt.

11. Vernetzter Fluorkautschukgegenstand, erhalten durch Vernetzen der Fluorkautschukzusammensetzung nach einem der Ansprüche 1 bis 10.

12. Vernetzter Fluorkautschukgegenstand nach Anspruch 11, der eine Zugfestigkeit von mindestens 9 MPa, eine Zugdehnung von mindestens 100% und einen Restdehnungsanteil nach einem Wärmealterungsbeständigkeitstest (230°C×168 Stunden) von mindestens 60% aufweist,
wobei die Zugfestigkeit und die Zugdehnung gemäß JIS K6251:2004 bestimmt sind und der Restdehnungsanteil nach einem Wärmealterungsbeständigkeitstest gemäß JIS K6257:2003 und JIS K6251:2004 bestimmt ist.

## Revendications

1. Composition de fluorocaoutchouc comprenant un fluorocaoutchouc (A) et un ester de glycérol (B) d'un acide gras insaturé en C₁₄₋₂₀, dans laquelle la teneur en l'ester de glycérol (B) va de 0,9 à 2,6 parties en masse, basée sur 100 parties en masse du fluorocaoutchouc (A), dans laquelle l'ester de glycérol (B) est l'un ou l'autre d'un monoester de glycérol et d'un diester de glycérol ou les deux.

2. Composition de fluorocaoutchouc selon la revendication 1, dans laquelle l'acide gras insaturé en C₁₄₋₂₀ est au moins un élément sélectionné parmi le groupe constitué de l'acide palmitoléique, l'acide oléique et l'acide vaccénique.

3. Composition de fluorocaoutchouc selon la revendication 1 ou 2, dans laquelle l'ester de glycérol (B) est l'un ou l'autre d'un monoglycéride d'acide oléique et d'un diglycéride d'acide oléique ou les deux.

4. Composition de fluorocaoutchouc selon l'une quelconque des revendications 1 à 3, qui contient en outre une charge (C), dans laquelle la teneur en la charge (C) va de 1 à 100 parties en masse, basée sur 100 parties en masse du fluorocaoutchouc (A).

5. Composition de fluorocaoutchouc selon la revendication 4, dans laquelle la charge est au moins un élément sélectionné parmi le groupe constitué du noir de fourneau et du noir thermique.

6. Composition de fluorocaoutchouc selon l'une quelconque des revendications 1 à 5, qui contient en outre un peroxyde organique (D), dans laquelle la teneur en le peroxyde organique (D) va de 0,1 à 5 parties en masse, basée sur 100 parties en masse du fluorocaoutchouc (A).

7. Composition de fluorocaoutchouc selon la revendication 6, dans laquelle le peroxyde organique est le a,a'-bis(t-butylperoxy)-p-diisopropylbenzène ou 2,5-diméthyl-2,5-di(t-butylperoxy)hexane.

8. Composition de fluorocaoutchouc selon l'une quelconque des revendications 1 à 7, dans laquelle le fluorocaoutchouc (A) est au moins un élément sélectionné parmi le groupe constitué d'un copolymère de tétrafluoroéthylène/propylène, d'un copolymère de tétrafluoroéthylène/propylène/fluorure de vinylidène, d'un copolymère de fluorure de vinylidène/hexafluoropropylène, d'un copolymère de fluorure de vinylidène/tétrafluoroéthylène/hexafluoropropylène, d'un copolymère de fluorure de vinylidène/2,3,3,3-tétrafluoropropène et d'un copolymère de tétrafluoroéthylène/éther de vinyle perfluoro(alkylique).

9. Composition de fluorocaoutchouc selon l'une quelconque des revendications 1 à 8, dans laquelle le fluorocaoutchouc (A) contient des unités basées sur le tétrafluoroéthylène et des unités basées sur le propylène, dans laquelle le rapport molaire des unités basées sur le tétrafluoroéthylène sur les unités basées sur le propylène va de 40/60 à 70/30.

10. Composition de fluorocaoutchouc selon l'une quelconque des revendications 1 à 9, dans laquelle le fluorocaoutchouc (A) contient des atomes d'iode, dans laquelle la teneur en iode va de 0,01 à 5,0 % en masse.

11. Article en fluorocaoutchouc réticulé obtenu en réticulant la composition de fluorocaoutchouc selon l'une quelconque des revendications 1 à 10.

12. Article en fluorocaoutchouc réticulé selon la revendication 11, qui a une résistance à la traction d'au moins 9 MPa, un allongement à la traction d'au moins 100% et une proportion restante d'allongement après un test de résistance au vieillissement thermique (230°Cx168 heures) d'au moins 60 %,
dans laquelle la résistance à la traction et l'allongement à la traction sont déterminés conformément à JIS K6251:2004, et la proportion restante d'allongement après un test de résistance au vieillissement thermique est déterminée conformément à JIS K6257:2003 et JIS K6251:2004.
